# EUROPÄISCHE PATENTSCHRIFT

(11) **EP 0 218 992 B1**
(45) Veröffentlichungstag und Bekanntmachung des Hinweises auf die Patenterteilung: **26.01.1994**
(21) Anmeldenummer: 86113504.4
(22) Anmeldetag: 01.10.1986
(51) Int. Cl.: A23P 1/12, A21C 11/16

(54) **Kochextruder**
Cooking extruder
Cuiseur-extrudeur

(30) Priorität: 10.10.1985 DE 3536203
(43) Veröffentlichungstag der Anmeldung: 22.04.1987
(73) Patentinhaber: SCHAAF TECHNOLOGIE GMBH, D-65520 Bad Camberg (DE)
(72) Erfinder: Schaaf, Heinz, W-6277 Bad Camberg-Oberselters (DE)
(74) Vertreter: Lewald, Dietrich, Dipl.-Ing.

(56) Entgegenhaltungen:
- EP-A- 0 071 183
- EP-A- 0 173 982
- GB-A- 1 253 104

## Beschreibung

Die Erfindung betrifft einen Kochextruder mit einer Extruderschnecke zum Zuführen des Materials für einen aus einem Nahrungsmittel bestehenden Hüllkörper und mit einem Düsenkopf, durch den ein Füllrohr zur Zuführung von Füllmaterial geführt ist, wobei der Düsenkopf zur Formung des Hüllkörpers einen Hohldorn und einen Düsenring aufweist und das Füllrohr von einem Ringraum umgeben ist, der gegebenenfalls an eine Unterdruckquelle anschließbar ist, wobei das Material des Hüllkörpers unter einem Winkel zur Achse des Füllrohres zuführbar ist und in Extrusionsrichtung hinter dem Düsenkopf Formwalzen angeordnet sind, zwischen die das Füllrohr hindurchgeführt ist.
Solche ähnlichen Kochextruder bzw. Düsenköpfe hierfür sind vorgeschlagen worden in der EP-A-0 173 982 bzw. in anderer Konstruktion bekannt aus der EP-A-0 071 183.
Zur Ausbildung eines gleichmäßigen Hüllkörpers kann im Düsenkopf eine Stauplatte um das Führungsrohr für das Füllrohr angeordnet werden. Diese Stauplatte ist mit einer Lochung zur gleichmäßigen Verteilung des Materialstromes vor dem Austritt aus dem Düsenkopf versehen, wobei je nach Art des zu extrudierenden Materials insbesondere an der dem Extruder abgewandten Seite der Stauplatte mehr Durchgangslöcher angeordnet sein können als an der dem Extruder nahen Seite. Mit dieser Anordnung wird mehr Material um das Führungsrohr herumgeführt, da der Widerstand im Extrudernahen Bereich der Stauplatte größer wird. Trotz dieser Anordnung können aber immer noch unterschiedliche Wandstärken an dem Füllrohr auftreten, was die Qualität und die Optik derartiger extrudierter Nahrungsmittel beeinträchtigen kann.

Der Erfindung liegt die Aufgabe zugrunde, einen gattungsgemäßen Kochextruder derart weiterzubilden, daß die Wandstärke des Hüllkörpers mit einfachen Mitteln über den gesamten Umfang gleichmäßig ausgebildet werden kann.

Diese Aufgabe wird erfindungsgemäß dadurch gelöst, daß der Abstand der Formwalzen zu dem Füllrohr hin einstellbar ist, und das Füllrohr als Hebel zur Einstellung des Austrittsspaltes zwischen dem Hohldorn des Düsenkopfs und dem Düsenring ausgebildet ist. Das Füllrohr dient dabei als Hebel für das Innenrohr innerhalb des Düsenkopfes, welches den um das Füllrohr herum ausgebildeten Ringraum abschließt. Durch leichtes Verschwenken des Füllrohres wird das Rohr, das als Dorn für die Ausbildung des Füllkörpers dient, ebenfalls leicht verschwenkt, so daß damit die Spaltbreite zwischen Düsenring und Dorn verstellt werden kann. Damit wird eine unterschiedliche Druckverteilung erreicht, so daß der Materialaustritt aus dem Ringraum lokal beeinflußt werden kann. Damit kann gezielt die Düse derart eingestellt werden, daß ein Hüllkörper mit über dem Umfang gleichmäßiger Wandstärke ausgebildet werden kann.

Gemäß bevorzugten Ausführungsformen ist ein Paar von sich gegenüber-liegenden Formwalzen oder sind zwei Paare etwa senkrecht zueinander gerichteter Formwalzen vorgesehen. Es ist auch möglich, die Formwalzen auf einem zur Achse des Füllrohres koaxialen Kreis verschwenkbar anzuordnen, daß die Drehachsen auf einem Kreisbogen eingestellt werden können, so daß die auf das Formwalzen ausgeht, an jedem gewünschten Punkt an dem Umfang des Füllrohres angesetzt werden kann.

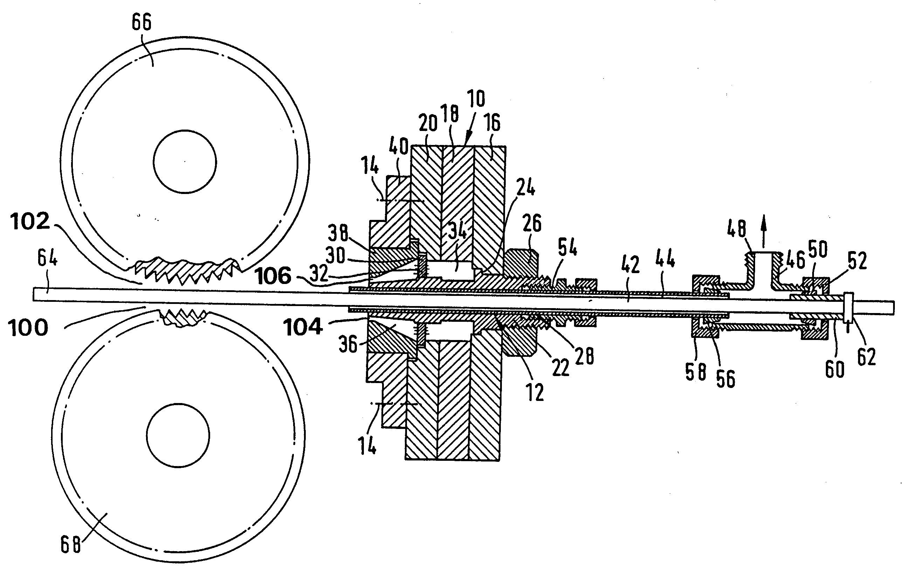

Ein Ausführungsbeispiel der Erfindung wird nachstehend anhand der Zeichnung naher erläutert.

Die Fig. zeigt einen Längsschnitt durch einen Düsenkopf.

Die in der Figur gezeigte Anordnung zur Herstellung eines Nahrungsmittels, bestehend aus einem Hüllkörper und gegebenenfalls einer in diesem Hüllkörper angeordneten Füllung, besteht aus einer Düsenplatte 10, in welcher in einem Bereich ein Düsenkopf 12 angeordnet ist. Die Düsenplatte 10 ist bei der gezeigten Ausführungsform aus drei über Schrauben 14 zusammengespannte Platten aufgebaut, wobei in einer hinteren Platte 16 lediglich Durchgangsbohrungen für den Düsenkopf 12 und für die Einleitung des Materialstromes für den Hüllkörper ausgebildet sind, eine mittlere Platte 18 ein Langloch aufweist, welches zur Führung des Materials für den Hüllkörper von dem Extruderende bis zu dem Düsenkopf dient, und eine vordere Platte 20, in welcher eine Durchgangsbohrung für den Düsenkopf und eine Durchgangsbohrung für eine Einstellschraube angeordnet ist.

Der Düsenkopf 12 besteht aus einem Hohldorn oder Führungsrohr 22, welcher sich über eine angeformte Schulter 24 an der hinteren Platte 16 abstützt und über eine Mutter 26 an dieser Platte 16 festgelegt ist. In dem Hohldorn 22 ist eine Auskleidung in Form eines Rohres 28 angeordnet, welche nach hinten über den Hohldorn 22 hinaus verlängert ist. In der vorderen Platte 20 ist eine Stauplatte 30 angeordnet, welche mit Durchgangsöffnungen 32 ausgebildet ist, durch welche das durch den Kanal 34 geführte Material für den Hüllkörper gepreßt wird. Dieses Material wird dann durch den Ringraum 36 geführt, der durch die Außenseite des Hohldorns 22 und die Innenseite eines Düseneinsatzes 38 gebildet wird. Der Düseneinsatz 38, der über eine Klemmplatte 40 an der Düsenplatte 10 befestigt ist, weist in der gezeigten Ausführungsform eine quadratische Öffnung auf. Das vordere Ende des Hohldornes 22 kann ebenfalls eine quadratische Außenkontur aufweisen, so daß ein Hüllkörper in Form eines Vierkantrohres ausgebildet wird.

Innerhalb des Hohldornes oder Führungsrohres 22 ist ein Füllrohr 42 vorgesehen, wobei zwischen der Innenseite des als Auskleidung wirksamen Rohres 28 und der Außenseite des Füllrohres 42 ein Ringraum 44 ausgebildet ist, welcher von einem T-förmigen Element 46 abgeschlossen ist. Dieses Element 46 ist über einen Stutzen 48 an eine Unterdruckquelle anschließbar, so daß der in dem rohrförmigen Hüllkörper während des Extrudierens gebildete Dampf abgesaugt werden kann. Dadurch wird ein Aufweichen des rohrförmigen porösen Hüllkörpers vermieden.

Das Füllrohr 42 ist durch das Element 46 hindurchgeführt, wobei über einen konischen Dichtring 50 und eine Mutter 52 eine Abdichtung des Elementes 46 an dem Füllrohr 42 erfolgt. Das Rohr 28 ist an dem Hohldorn 22 über eine mit einem Außengewinde versehene Muffe 54 festgelegt. Das Element 46 ist an dem Rohr 28 über einen konischen Dichtring 56 und eine Mutter 58 befestigt. Der konische Dichtring 50 liegt auf der Außenseite eines Rohrabschnittes 60 auf, durch welchen das Füllrohr 42 verschoben bzw. nach hinten aus dem Düsenkopf herausgezogen werden kann, Um ein Herausziehen aus dem Düsenkopf nach vorn zu verhindern, ist hinter dem Element 46 an dem Füllrohr 42 eine Klemme 62 vorgesehen, welche sich an dem Element bei gleichzeitigem Festhalten des Füllrohrs 42 abstützt.

Der vor den Düsenkopf ragende Bereich 64 des Füllrohres 42 ist zwischen zwei Formwalzen 66 und 68 hindurchgeführt. Die Formwalzen 66 und 68, die zur Ausbildung eines gewünschten Musters an der Außenseite des Hüllkörpers vorgesehen sind, können auch beispielsweise bis auf Rotglut aufheizbar sein, so daß an der Außenseite des Hüllkörpers eine lokale Wärmebehandlung erfolgen kann. Beispielsweise kann mit derartigen Formwalzen ein Warenzeichen in Form eines Brandzeichens aufgebracht werden. Während des Betriebs der Formwalzen dient der vordere Bereich 64 des Füllrohres 42 als Widerlager, so daß der Hüllkörper nicht unbegrenzt dem Druck der Formwalzen ausweichen kann. Wenn die Formwalzen mit sich ergänzenden Hohlkehlen ausgebildet sind, kann bei entsprechender Aufheizung ein Backen der Außenseite des Hüllkörpers erfolgen, so daß eine angebackene, knusprige Oberfläche des Hüllmaterials erreicht wird.

Wie aus der Figur zu ersehen ist, ist der Abstand 100 der Formwalze 68 von dem zwischen den Formwalzen verlaufenden Bereich 64 des Füllrohres 42 geringer als der Abstand 102 der Formwalze 66 yon dem Füllrohr. Dadurch wird das Füllrohr mit dem vorderen Ende leicht nach oben gedrückt, so daß das Füllrohr als Hebel dient und die Auskleidung in Form des Rohres 28 mit dem vorderen Ende des Hohldornes ebenfalls nach oben gedrückt wird. Damit wird die Austrittsweite des Ringraumes 36 unterschiedlich, und zwar wird der untere Bereich 104 weiter, während der obere Bereich 106 enger wird. Auf diese Weise wird der austretenden Masse unterschiedlicher Widerstand entgegengesetzt, was in einer Umverteilung des Materials innerhalb des Ringraumes resultiert. Damit ist es möglich, gezielt Einfluß zu nehmen auf die Wandstärke des aus dem Ringraum austretenden Hüllkörpers, so daß evtl. extruder- und materialbedingte Ungleichmäßigkeiten reguliert werden können.

Anstelle eines Paares sich gegenüberliegender Formwalzen können auch beispielsweise zwei Walzenpaare eingesetzt werden, welche senkrecht zueinander angeordnet sind. Wenn anstelle ein im Querschnitt rechteckig ausgebildeter Hüllkörper ein im Querschnitt runder Hüllkörper ausgebildet werden soll, können die Formwalzen in einem Gestell angeordnet sein, welches eine zur Achse des Füllrohres koaxiale Achse aufweist, so daß die Formwalzen jede Stellung auf einem Kreisbogen einnehmen können, um eine Wandstärkenkorrektur an jedem beliebigen Punkt des Hüllkörpers vornehmen zu können.

## Patentansprüche

1. Kochextruder mit einer Extruderschnecke zum Zuführen des Materials für einen aus einem Nahrungsmittel bestehenden Hüllkörper und mit einem Düsenkopf (12), durch den ein Füllrohr (42) zur Zuführung von Füllmaterial geführt ist, wobei der Düsenkopf (12) zur Formung des Hüllkörpers einen Hohldorn (22) und einen Düsenring (38) aufweist und das Füllrohr (42) von einem Ringraum (44) umgeben ist, der gegebenenfalls an eine Unterdruckquelle (48) anschließbar ist, wobei das Material des Hüllkörpers unter einem Winkel zur Achse des Füllrohres (42) zuführbar ist und in Extrusionsrichtung hinter dem Düsenkopf (12) Formwalzen (66, 68) angeordnet sind, zwischen die das Füllrohr (42) hindurchgeführt ist, dadurch **gekennzeichnet,** daß der Abstand der Formwalzen (66, 68) zu dem Füllrohr (42) hin einstellbar ist und das Füllrohr (42) als Hebel zur Einstellung des Austrittsspalts zwischen dem Hohldorn (22) des Düsenkopfes (12) und dem Düsenring (38) ausgebildet ist.

2. Kochextruder nach Anspruch 1, dadurch **gekennzeichnet,** daß mindestens ein Paar von sich gegenüberliegenden Formwalzen (66, 68) vorgesehen ist.

3. Kochextruder nach Anspruch 2, dadurch **gekennzeichnet,** daß zwei Paare etwa senkrecht zueinander gerichteter Formwalzen vorgesehen sind.

4. Kochextruder nach einem der Ansprüche 1 bis 3, dadurch **gekennzeichnet,** daß die Achsen der Formwalzen auf einem zur Achse des Füllrohres (42) koaxialen Kreis verschwenkbar sind.

## Claims

1. Cooking extruder having an extruder screw for feeding the material for a casing body consisting of a foodstuff and having a die head (12) through which a filling pipe (42) for feeding filling material is guided, the die head (12) having, to shape the casing body, a hollow mandrel (22) and a die ring (38) and the filling pipe (42) being surrounded by an annular chamber (44) which can be connected if appropriate to a source of sub-atmospheric pressure (48), the material of the casing body being feedable at an angle to the axis of the filling pipe (42) and there being arranged downstream of the die head (12), in the direction of extrusion, shaping rollers (66, 68) between which the filling pipe (42) is led, characterised in that the distance from the shaping rollers (66, 68) to the filling pipe (42) is adjustable and the filling pipe (42) is designed as a lever for adjusting the outlet gap between the hollow mandrel (22) of the die head (12) and the die ring (38).

2. Cooking extruder according to Claim 1, characterised in that at least one pair of mutually opposing shaping rollers (66, 68) is provided.

3. Cooking extruder according to Claim 2, characterised in that two pairs of shaping rollers aligned approximately perpendicularly to one another are provided.

4. Cooking extruder according to one of Claims 1 to 3, characterised in that the axles of the shaping rollers are pivotable on a circle which is coaxial with the axis of the filling pipe (42).

## Revendications

1. Cuiseur-extrudeur, avec une vis extrudeuse pour l'alimentation du matériau utilisé pour un corps enveloppant en produit alimentaire, et avec une tête de filière (12) à travers laquelle est guidé un tube de remplissage (42) pour l'alimentation de matériau de remplissage, la tête de filière (12) présentant, en vue de la formation du corps enveloppant, un mandrin creux (22) et une bague de filière (38), le tube de remplissage (42) étant entouré par un espace annulaire (44), qui peut éventuellement être raccordé à une source de dépression (48), le matériau du corps enveloppant pouvant être alimenté sous un angle par rapport à l'axe du tube de remplissage (42), et des cylindres de formage (66, 68) étant disposés après la tête de filière (12) dans la direction d'extrusion, cylindres à travers lesquels est guidé le tube de remplissage (42), **caractérisé** en ce que la distance entre les cylindres de formage (66, 68) et le tube de remplissage (42) est réglable, et le tube de remplissage (42) est conçu comme levier pour régler la fente de sortie entre le mandrin creux (22) de la tête de filière (12) et la bague de filière (38).

2. Cuiseur-extrudeur selon la revendication 1, **caractérisé** en ce qu'il est prévu au moins une paire de cylindres de formage (66, 68) en vis-à-vis.

3. Cuiseur-extrudeur selon la revendication 2, **caractérisé** en ce qu'il est prévu deux paires de cylindres de formage orientés approximativement perpendiculairement entre eux.

4. Cuiseur-extrudeur selon l'une quelconque des revendications 1 à 3, **caractérisé** en ce que les axes des cylindres de formage peuvent être pivotés sur un cercle coaxial à l'axe du tube de remplissage (42).
